# EUROPEAN PATENT APPLICATION

(11) **EP 1 820 781 A2**
(43) Date of publication of application: **22.08.2007**
(21) Application number: 07101859.2
(22) Date of filing: 07.02.2007
(51) Int. Cl.: C02F 1/68, C02F 1/72

(54) **Acid water and process for its preparation**

(30) Priority: 07.02.2006 JP 2006029975
(71) Applicant: Oxy Japan Corporation, Tokyo 102-0083 (JP)
(72) Inventor: Torimoto, Yoshifumi, Tokyo 102-0083 (JP); Kotani, Nobuharu, Tokyo 102-0083 (JP)
(74) Representative: Vossius & Partner

(57) **Abstract**

Acid water containing negative charge oxygen atoms and showing an acidity level higher than pH 5 is provided. Acid water of a pH level not lower than pH 5 is prepared by conveying negative charge oxygen atoms produced by heating a composite oxide enclosing active oxygen by themselves or by means of gas not reacting with water and contacting them with water.

## Description

This application is based upon and claims the benefit of priority from prior Japanese Patent Application No. 2006-27796, filed February 7, 2006, the entire contents of which are incorporated herein by reference.

The present invention relates to acid water and, more particularly, it relates to acid water useful for sterilization, washing in semiconductor manufacturing processes and as reactive material.

Water equipped with one or more than one specific functions is referred to as functional water and typically and being utilized in processes for manufacturing semiconductor devices. For instance, hydrogen water containing hydrogen is useful for removing micro particles and carbonated water containing carbon dioxide is being utilized for prevention of static charge.
Water containing hydrogen peroxide and ozone water that contains ozone are being used for removing organic substances and washing semiconductor wafers in processes for manufacturing semiconductor devices.
It is also known that acid water and alkali water that are acidic alkaline by definition respectively can be manufactured by way of electrolysis of water containing salts to a small extent in an electrolyzer having a diaphragm.

However, in the case of ozone water, ozone contained in ozone water needs to be decomposed after use in order to make it no longer adversely affect human bodies and the environment. Hydrogen peroxide solution to a high concentration level is highly effective but dangerous so that it needs to be handled with care.
Acid water that is produced by electrolyzing water to which various salts are added as electrolytes contains substances originating from the added salts. Therefore, when acid water is used for treatment, the substances contained in the acid water have to be removed by ultra-pure water.

JP-A-10-286571 proposes a method of providing acid water and alkali water by electrolysis of ultra-pure water that does not contain any electrolyte in a solid electrolysis type electrolyzer in which an anode and a cathode are tightly bonded to the opposite surfaces of a positive ion exchange membrane.
However, the acidity of the obtained acid water is not satisfactory and hence such acid water has only limited applications. Thus acid has to be further added when such water is used for applications that require a higher acidity level.
In view of the above-identified circumstances, it is therefore the object of the present invention to provide acid water that is highly acidic, reactive and sterilizing but does not practically contain any electrolyte.

According to the present invention, the above object is achieved by providing acid water containing negative charge oxygen atoms and showing an acidity level higher than pH 5.
Preferably, acid water according to the invention contains only oxygen atoms, negative charge oxygen atoms and hydrogen atoms as component substances.
In another aspect of the present invention, there is provided sterilizing water containing negative charge oxygen atoms and showing an acidity level higher than pH 5.
In still another aspect of the present invention, there is provided an aqueous solution containing negative charge oxygen atoms and dissolving silicon nitride film to show an acidity level higher than pH 5.
In still another aspect of the present invention, there is provided a process for the preparation of acid water of a pH level not lower than pH 5 by conveying negative charge oxygen atoms produced by heating a composite oxide enclosing active oxygen by themselves or by means of gas not reacting with water and contacting them with water.

The invention will be described with reference to the accompanying drawings, wherein like numbers reference like elements.

FIG. 1 is a schematic illustration of a process for preparation of acid water according to the present invention; and

FIG. 2 is a graph illustrating some of the results of measuring acid water according to the present invention by means of an electron-spin resonance spectrometer.

The applicant of this patent application found that it is possible to prepare acid water showing an elevated acidity level by contacting gas containing negative charge oxygen atoms with water.
The applicant proposes to utilize the oxidation effect and the sterilization effect of gas containing negative charge oxygen atoms in WO2003/050037, JP-A-2005-1908 and JP-A-2006-6670.
More specifically, the applicant of this patent application proposes in the above listed patent documents to generate negative charge oxygen atoms by arranging electrodes on the surface of a burnt product of a composite oxide and applying a voltage thereto or by heating such a burned product and conveying the produced negative charge oxygen atoms by means of rare gas or the like to an object for the purpose of oxidizing or killing the object.
However, the applicant has never expected to produce acid water showing a high acidity level by contacting gas containing negative charge oxygen atoms with water.

The reason why acid water that shows a high acidity level is obtained by contacting gas containing negative charge oxygen atoms with water is not clear. However, the obtained acid water contains negative charge oxygen atoms and shows a strong sterilizing effect. It is highly reactive and provides a number of advantages.
Acid water according to the present invention has special effects including a strong sterilizing effect and is highly reactive.

Acid water according to the invention can be prepared by contacting gas containing negative charge oxygen atoms with water. In other words, it is possible to manufacture acid water that contains only oxygen atoms, negative charge oxygen atoms and hydrogen atoms. Thus, apart from the effects, the obtained acid water is not different from ordinary water and hence can be handled with ease.
For the purpose of the present invention, the expression of containing only oxygen atoms, hydrogen atoms and negative charge oxygen atoms means containing impurities to a small extent that are inevitably originating from materials containing only oxygen atom, hydrogen atoms and negative charge oxygen atoms that are atoms of water as components in the case of acid water manufactured from pure water by way of a process according to the present invention.

For example, when clean water that is being used in the food industry is used as material for acid water according to the present invention and foods are treated by acid water according to the present invention for sterilization and washing, it does not contain any other chemical agents for sterilization and washing. Thus, it is possible to simplify or eliminate the post-treatment washing process.
When acid water according to the present invention is prepared by using ultra-pure water that is being used in the process of manufacturing semiconductor devices, it provides both the washing effect of ultra-pure water and that of acid water. Then, such acid water will be very effective and advantageous for the process of manufacturing semiconductor devices.
While the advantages of acid water prepared by using water as material are described above, a surface active agent, a chelating agent and/or some other agent may be added to the prepared acid water in order to enhance the cleaning effect thereof depending on the application.

A baked composite oxide that can be used for preparing acid water according to the present invention may be a sintered composite oxide that comprises negative charge oxygen atoms.
More specifically, a baked composite oxide obtained by baking a composite oxide of calcium oxide and aluminum oxide (12CaO·7Al₂O₃ to be also referred to as C12A7) or a composite oxide additionally containing cerium oxide may be used as material.

When the baked composite oxide is calcium aluminate, the substance that operates as calcium source may be selected from oxides such as calcium oxide and various substances that can be baked to produce calcium oxide in an oxygen containing atmosphere. Suitable examples of such substances include calcium hydroxide and calcium carbonate.
The substance that operates as aluminum source may be selected from oxides such as aluminum oxide and various substances that can be baked to produce aluminum oxide in an oxygen containing atmosphere without any particular treatment. Suitable examples of such substances include aluminum hydroxide.

It is possible to enhance the effect of producing negative charge oxygen atoms of a baked composite oxide by heating the oxide. While a baked composite oxide can be heated by any of various known techniques, a compact apparatus that shows a high heating efficiency can be obtained by integrally combining a ceramic heater having a heat-emitting body as integral component thereof and a film of a baked composite oxide.
For example, a heater-integrated type apparatus prepared by forming a sintered composite oxide thin film having a thickness of 5 to 1,000 µm on a ceramic heater containing a heat-emitting body in the inside can be used to realize an efficient heating operation.

Preferably, a baked composite oxide for producing negative charge oxygen atoms according to the present invention is heated to above 700 °C in the case of C12A7 and above 400 °C in the case of C12A7 containing cerium oxide for use.

Acid water according to the present invention can be prepared by contacting water with the produced negative charge oxygen atoms alone or along with conveyor gas.
The conveyor gas may be selected from rare gases such as helium, argon and xenon, nitrogen and dry air.
Preferably, the piping or tube for guiding the conveyor gas or gas containing negative charge oxygen atoms to a desired position is made of nylon, glass or some other material is positive on triboelectric series when an electrically non-conductive material is to be used. An anti-corrosive oxide film can be used when the material of the piping or tube is selected from metals.

Acid water according to the present invention is obtained by contacting negative charge oxygen atoms with water and the acidity of the obtained acid water is higher when the duration of contact with gas containing oxygen atoms. Thus, the duration of contact may be adjusted depending on the application of acid water.
A negative charge oxygen atom producing apparatus for producing negative charge oxygen atoms shows a high production efficiency when the pressure of the negative charge oxygen atom producing section of the negative charge oxygen atom producing apparatus is low. Therefore, it is preferable to reduce the internal pressure of the negative charge oxygen atom producing section so as make it fall lower than the atmospheric pressure and convey negative charge oxygen atoms by means of conveyor gas before contacting the negative charge oxygen atoms with water under pressure raised to a level higher than the atmospheric pressure.
Negative charge oxygen atoms can be brought into contact with water by injecting the gas conveying negative charge oxygen atoms into water so as to expose water to gas. Before contacting the gas conveying negative charge oxygen atoms with water, the conveyor gas is preferably cooled to a temperature level substantially same as that of the water to be brought into contact with it.

It is possible to raise the efficiency of producing negative charge oxygen atoms and hence acid water by reducing the internal pressure of the negative charge oxygen atom producing section and hold the pressure of the contact section for contacting the conveyor gas with water to the atmospheric pressure level to as to give rise to a pressure difference between them.
For example, it is possible to reduce the internal pressure of the negative charge oxygen atoms producing section to a pressure level lower than the atmospheric pressure and raise the pressure of the contact section to a pressure level higher than the atmospheric pressure by drawing negative charge oxygen atoms and injecting them into water with the conveyance gas by means of a pump.
Alternatively, an aspirator may be used in place of the pump and water for preparing acid water may be supplied to the aspirator so that the water may be brought into contact with negative charge oxygen atoms in the aspirator.

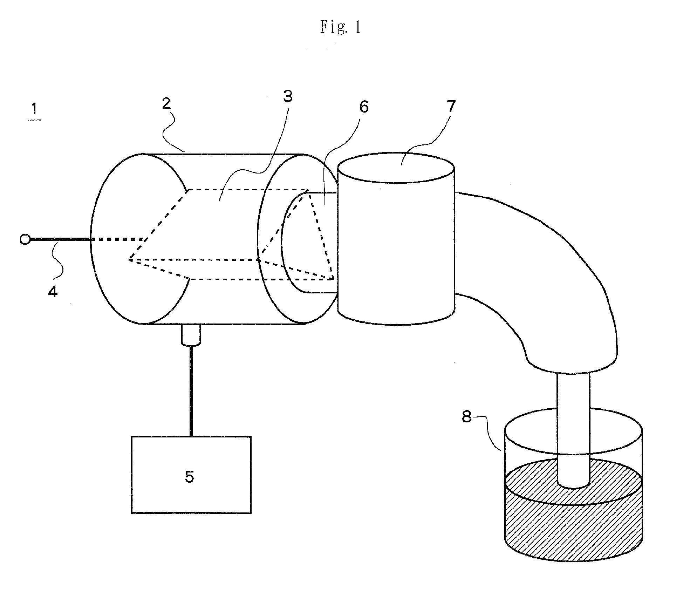

FIG. 1 is a schematic illustration of a process for preparation of acid water according to the present invention.
Referring to FIG. 1, the apparatus 1 for preparing acid water comprises a negative charge oxygen atoms producing apparatus 2, which negative charge oxygen atoms producing apparatus 2 has negative charge oxygen atoms producing elements 3 that are integrally formed with respective ceramic heaters and arranged in the inside thereof.
Each of the negative charge oxygen atom producing apparatus 3 is formed on a ceramic heater that contains a heat-emitting body in a piece of alumina-made ceramic as integral part thereof. A total of three negative charge oxygen atoms producing elements 3 are arranged in the tube of the negative charge oxygen atoms producing apparatus 2 illustrated in FIG. 1. The apparatus 2 of FIG. 1 can produce a large quantity of oxygen atoms if compared with an apparatus having a single negative charge oxygen atoms producing element.
A heating current is supplied from a heating current supply circuit to a heating electrode terminal 4 to heat the negative charge oxygen atoms producing elements 3 to a predetermined temperature level.

On the other hand, helium, argon, nitrogen, dry air or some other gas is supplied as conveyor gas from a conveyor gas supply means 5 connected to the negative charge oxygen atoms producing apparatus. The feed pipe 6 arranged in the negative charge oxygen atoms producing apparatus 2 is provided with a pump 7. As the pump 7 draws the conveyor gas, negative pressure is produced on the surfaces of the negative charge oxygen atoms producing elements 3 while positive pressure is produced at the output side of the pump 7 so that conveyor gas is supplied into the water in the inside of water tank 8 and brought into contact with water to efficiently produce acid water that contains negative charge oxygen atoms.

Now, the present invention will be described further by way of examples.

### Example 1

Three heater-integrated type negative charge oxygen atom generating elements, each being formed by laying thin films of a composite oxide of calcium oxide and aluminum oxide (12CaO·7Al₂O₃) in a ceramic heater and having longitudinal and transversal dimensions of 122 mm, are arranged to produce a regular triangle tube with the composite oxide layers of C12A7 facing inward. Then, the electric current supplied to the heaters was adjusted to maintain the inward surface temperature at 700 °C .
Subsequently, argon was supplied as conveyor gas at a flow rate of 51/min and cooled by means of a stainless steel flexible tube arranged at exits of the generating elements. Thereafter, the generated negative charge oxygen atoms were injected into 100 ml of ultra-pure water prepared by means of an ultra-pure water manufacturing apparatus WD500 (tradename, available from Yamato Chemicals) by way of a nylon-made tube for five hours. The acidity of the obtained acid water was gauged and found to be equal to pH 4.

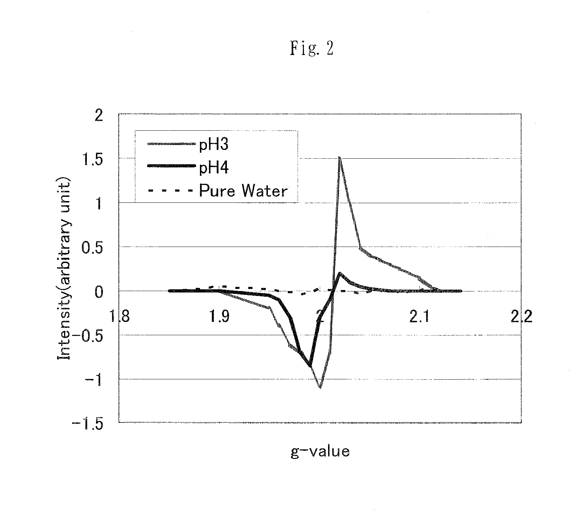

Then, the obtained acid water was observed by means of an electron-spin resonance spectrometer (JFS-FE-3X: tradename, available from JEOL) to find peaks that indicate negative charge oxygen atoms as shown in FIG. 2.
Besides, the generated negative charge oxygen atoms were also injected into 100 ml of pure water for 50 hours. The acidity of the obtained acid water was gauged and found to be equal to pH 3. Then, the obtained acid water was observed by means of the electron-spin resonance spectrometer to find peaks that indicate negative charge oxygen atoms and are higher than the peaks of the acid water showing the acidity of pH 4 as shown in FIG. 2.
For the purpose of comparison, pure water to which no gas containing negative charge oxygen atoms was also observed. The results of the observation are also shown in FIG. 2.

Example 2
The effect of the acid water obtained in Example 1 was observed by mixing the acid water individually with C.Cladosporioides NBRC6348, Rhodotorula sp, E. coli NBRC3972 and S. aureus NBRC13276 to make them show a concentration of 1,000 microbes / ml and making the acid water act on them at 25 °C for 15 minutes.
Then, the C.Cladosporioides NBRC6348 and the Rhodotorula sp were applied to respective PDA culture mediums and the E. coli NBRC3972 and the S.aureus NBRC13276 were applied to respective SCDAgar culture mediums by 100 µl each. The applied microbial species were incubated at an incubation temperature of 30 °C for 3 days in the case of the black fungus and 1 day in the case of the remaining species in an incubator. After the incubation, the number of colonies of each of the microbial species was counted.

For the purpose of comparison, specimens were prepared by dispersing the same microbial species into normal saline solutions to the same concentration level and incubated under the same conditions. After the incubation, the number of colonies of each of the microbial species was also counted.
The ratio of the number of colonies of each microbial species dispersed in the normal saline solution relative to the number of colonies of the species treated in the acid water was defined to be survival ratio. The survival ratios of the microbial species are listed in Table 1.

Comparative Example 1
The survival ratios of the microbial species were gauged as in Example 1 except that the acid water was replaced by sulfuric acid of the acidity listed in Table 1. The obtained results are also shown in Table 1.

**Table 1**

| microbe species | type of treatment liquid | pH of treatment liquid | survival ratio |
|---|---|---|---|
| C.Cladosporioides NBRC6348 | acid water | 2.9 | 0.00084 |
| C.Cladosporioides NBRC6348 | sulfuric acid | 2.5 | 0.30 |
| Rhodotorula sp, E | acid water | 3.0 | < 0.00035 |
| Rhodotorula sp, E | sulfuric acid | 2.9 | 0.81 |
| E. coli NBRC3972 | acid water | 4.0 | 0.0077 |
| E. coli NBRC3972 | sulfuric acid | 4.0 | 0.70 |
| S.aureus NBRC13276. | acid water | 4.0 | 0.45 |
| S.aureus NBRC13276 | sulfuric acid | 4.0 | 1.0 |

Example 3
A silicon wafer was immersed in the acid water of pH 4.0 obtained in Example 1 at temperature of 25°C. The thickness of the produced oxide film was observed by means of a spectral ellipsometer (available from Micropack). The obtained result is shown in Table 2 along with the duration of immersion.

**Table 2**

| duration of immersion | no immersion treatment | 10 min. | 30 min. |
|---|---|---|---|
| oxide film thickness (nm) | 0.8 | 2.5 | 6.8 |

Example 4
Photo-resist (OFPR-8000: tradename, available from Tokyo Ohka Kogyo) was applied to a silicon wafer to a thickness of 100 nm and set by a heat treatment at 130 °C for 1 hour. Subsequently, the silicon wafer was immersed in the acid water of pH 4.0 obtained in Example 1 at temperature of 25 °C to observe the thickness of the exfoliated resist film by means of a spectral elliposometer (available from Micropack) . The obtained result is shown in Table 3 along with the duration of immersion.

**Table 3**

| duration of immersion | no immersion treatment | 60 min. | 120 min. |
|---|---|---|---|
| exfoliated film thickness (nm) | 0 | 15 | 24 |

Example 5
A silicon wafer was treated in a CVD system to form a silicon nitride film with a thickness of 100 nm. Then, the silicon wafer bearing the formed silicon nitride film was immersed in the acid water of pH 4.0 obtained in Example 1 at temperature of 25 °C to observed the thickness of the removed silicon nitride film that was removed by the immersion treatment by means of a spectral ellipsometer (available from Micropack). The obtained result is shown in Table 4 along with the duration of immersion.

**Table 4**

| duration of immersion | no immersion treatment | 60 min. | 120 min. |
|---|---|---|---|
| removed silicon nitride thickness (nm) | 0 | 5 | 12 |

Since acid water according to the present invention is prepared by contacting water with gas that contains negative charge oxygen atoms, it is acidic and shows remarkable effects including an effect of killing microbes and that of oxidizing silicon wafers because due to the negative charge oxygen atoms it contains. Additionally, since it does not contain any substances that do not originate from water, it is highly effective for various processes including those for treating waste water, tap water and drained water, sterilizing beverage containers and piping, forming an oxide film on silicon wafers, exfoliating resist films and removing silicon nitride films. Acid water according to the present invention provides advantages such as that it is only necessary to wash the object treated by acid water after the treatment and hence no specific cumbersome post-treatment is required for the object.

## Claims

1. Acid water containing negative charge oxygen atoms and showing an acidity level higher than pH 5.

2. Acid water according to claim 1, wherein
it contains only oxygen atoms, negative charge oxygen atoms and hydrogen atoms as component substances.

3. Sterilizing water containing negative charge oxygen atoms and showing an acidity level higher than pH 5.

4. An aqueous solution containing negative charge oxygen atoms and dissolving silicon nitride film to show an acidity level higher than pH 5.

5. A process for the preparation of acid water of a pH level not lower than pH 5 by conveying negative charge oxygen atoms produced by heating a composite oxide enclosing active oxygen by themselves or by means of gas not reacting with water and contacting them with water.
